Europäisches Patentamt

(19) European Patent Office

Office européen des brevets

(11) Veröffentlichungsnummer: **0 165 541**

**A2**

(12) **EUROPÄISCHE PATENTANMELDUNG**

(21) Anmeldenummer: **85107169.6**

(22) Anmeldetag: **11.06.85**

(51) Int. Cl.⁴: **E 02 B 3/06**

(30) Priorität: **20.06.84 DE 3422888**

(43) Veröffentlichungstag der Anmeldung:
**27.12.85 Patentblatt 85/52**

(84) Benannte Vertragsstaaten:
**BE FR GB IT NL SE**

(71) Anmelder: **Waas, Heinrich, Dr. Ing. E.h.**
**Am Stadtwald 50**
**D-5300 Bonn (Bad Godesberg)(DE)**

(72) Erfinder: **Waas, Heinrich, Dr. Ing. E.h.**
**Am Stadtwald 50**
**D-5300 Bonn (Bad Godesberg)(DE)**

(74) Vertreter: **Richter, Joachim, Dipl.-Ing. et al,**
**Patentanwälte Richter u.Werdermann Neuer Wall 10**
**D-2000 Hamburg 36(DE)**

(54) **Vorrichtung zur Dämpfung von Oberflächenwellen, insbesondere zum Schutz von schwimmenden oder festen Bauwerken oder von Küsten.**

(57) Vorrichtung zur Dämpfung von Oberflächenwellen, insbesondere zum Schutz von schwimmenden oder festen Bauwerken, oder von Küsten.

Eine Vorrichtung dient zum Schutz von schwimmenden oder festen Bauwerken oder von Küsten und besteht aus einem schwimmfähigen, als biegeelatische Platte ausgebildeten, Teppich (10) aus einer Anzahl von waagerecht liegenden und reihenweise neben- und hintereinander oder versetzt zueinander angeordneten handelsüblichen Kraftfahrzeugreifen (20), die über ein Flechtwerk (21) aus Seilen, Bändern, Abstandshaltern bzw. Verbindungselementen od.dgl. (22) und Auftriebskörpern (23) miteinander verbunden sind.

FIG. 4

Vorrichtung zur Dämpfung von Oberflächenwellen,insbesondere zum Schutz von schwimmenden oder festen Bauwerken
oder von Küsten.

Die Erfindung betrifft eine Vorrichtung zur Dämpfung von
Oberflächenwellen, insbesondere zum Schutz von schwimmenden
oder festen  Bauwerken oder von Küsten, bestehend aus einem
schwimmfähigen Teppich aus einer Anzahl von reihenweise
neben- und hintereinander oder versetzt zueinander angeordneten, mittels Seilen oder Ketten miteinander verbundenen
Schwimmkörpern aus Kraftfahrzeugreifen.

Aus der DE-Z."Meerestechnik", Februar 1977, S. 26, ist
eine derartige Vorrichtung bekannt, bei der mehrere zu einem
Schwimmteppich vereinigte senkrechtstehende Kraftfahrzeugreifen als Wellenbrecher vorgesehen sind. Dabei sind die
Kraftfahrzeugreifen über Seile oder Ketten miteinander verbunden. Dadurch, daß bei diesem Schwimmteppich die Kraftfahrzeugreifen senkrechtstehend sind, ist ein derartiger Schwimmteppich nicht einsetzbar,um Sandwanderungen auf dem Meeresboden und insbesondere in Küstennähe zu verhindern, da ein
derartiger Schwimmteppich, wenn er auf den Meeresboden abgesenkt ist, nicht zur Anlage auf dem Meeresboden kommen kann,
da im abgesenkten Zustand die einzelnen Kraftfahrzeugreifen
in den verschiedensten Winkelstellungen zueinander auf dem
Meeresboden liegen würden, wodurch sie selbst der Strömung
ausgesetzt sind,mit der Folge, daß der auf den Meeresboden
abgesenkte Schwimmteppich mit der Strömung mitgerissen wird,
zumindest wird in keiner Weise eine ausreichende Verankerung
am Meeresboden erreicht. Mit diesem Schwimmteppich sind
Sandwanderungen am Meeresboden nicht aufhaltbar. Hinzu kommt,
daß die Kraftfahrzeugreifen dieses Schwimmteppichs aufgrund
ihrer  senkrechtstehenden  Anordnung in dem Schwimmteppich
nur  mit einem ganz geringen Abschnitt oberhalb der Wasseroberfläche zu liegen kommen, so daß in keiner Weise gewährleistet ist, Wellenenergie auf einer größeren Fläche zu
vernichten.

Eine weitere Ausführungsform eines Schwimmteppichs geht aus der US-PS 1,933,597 hervor. Hier besteht der Schwimmteppich aus zu einem U zusammengefügten Schwimmkörpern, die als Hohlkörper ausgebildet und miteinander derart verbunden sind, daß innerhalb der von dem Schwimmteppich abgegrenzten Wasserfläche eine wellenberuhigte Wasserzone geschaffen wird, die als Landefläche für Wasserflugzeuge dient, wobei die einzelnen Schwimmkörper des U-förmigen Schwimmteppichs diese wellenberuhigte Wasserzone wallartig umgeben. Der so geschaffene Schwimmteppich hat wellenbrechende Eigenschaften zur Schaffung einer wellenberuhigten inneren Zone. Ein derartiger Schwimmteppich ist jedoch nicht auf den Meeresboden absenkbar und in keiner Weise zur Verhinderung von Sandwandungeren am Meeresboden einsetzbar.

Die Erfindung löst die Aufgabe, eine Vorrichtung zur Dämpfung von Oberflächenwellen, insbesondere zum Schutz von schwimmenden oder festen Bauwerken oder von Küsten zu schaffen, mit der ein wirtschaftlicher und kostengünstiger Küstenschutz bzw. ein Schutz von im Meer fest angeordneten oder schwimmenden Bauwerken oder Schiffen durch Verlagerung der Wellenenergie-Vernichtungszone in einen außerhalb der Küste bzw. des zu schützenden Bauwerkes liegenden Bereich erreicht wird und die auch zur Verhinderung von Sandwanderungen auf dem Meeresboden, insbesondere in Küstennähe, einsetzbar ist.

Zur Lösung dieser Aufgabe wird eine Vorrichtung der eingangs genannten Art vorgeschlagen, die gemäß der Erfindung in der Weise ausgebildet ist, daß der Schwimmteppich als biegeelastische Platte aus waagerecht liegend angeordneten Kraftfahrzeugreifen besteht, die über obere und/oder untere Abstandshalter miteinander verbunden und auf in einem Abstand voneinander angeordneten Auftriebskörpern, wie z.B. aufblasbaren Tragschläuchen, angeordnet sind.

Mit einer derart ausgebildeten Vorrichtung ist ein unkonventionelles System mit der Möglichkeit geschaffen, die Wellenenergie auf einer größeren Fläche und sanft zu vernichten. Ein derartiger Küstenschutz aus einem Schwimmteppich aus Kraftfahrzeugreifen ist wirtschaftlich herstellbar. Außerdem ist mit dieser Vorrichtung auch ein Einfluß auf die Sandwanderungen im Küstenbereich möglich. Dadurch, daß die Kraftfahrzeugreifen in dem Schwimmteppich waagerechtliegend angeordnet sind, liegen die Kraftfahrzeugreifen bei auf den Meeresboden abgesenktem Schwimmteppich auf dem Meeresboden an, so daß Sandanhäufungen im Innenraum eines jeden Kraftfahrzeugreifens erfolgen können, wodurch eine Sandwanderung auf dem Meeresboden aufgehalten wird, wobei gleichzeitig diese Sandanlagerungen in den Innenraumbereichen der Kraftfahrzeugreifen zu einer Verfestigung des Schwimmteppichs am Meeresboden beitragen.

Dadurch, daß die Kraftfahrzeugreifen auf aufblasbaren Tragschläuchen angeordnet sind, ist es möglich, den Schwimmteppich in aufgeblasenem Zustand der Tragschläuche auf der Wasseroberfläche zu halten, so daß der Schwimmteppich allen Wellenbewegungen des Wassers sich anpassen kann.

Vorteilhafte Ausgestaltungen der Erfindung sind in den Unteransprüchen gekennzeichnet.

Im folgenden wird der Gegenstand der Erfindung in den Zeichnungen erläutert. Es zeigt

Fig. 1 in einer schematischen Ansicht eine ungeschützte Küste mit einer kleinen Zone der Wellenenergie-Vernichtung,

Fig. 2 in einer schematischen Ansicht eine baulich geschützte Küste mit einer im Bauwerksbereich liegenden Zone der Wellenenergie-Vernichtung,

Fig. 3 in einer schematischen Ansicht eine durch einen Schwimmteppich geschützte Küste und mit weit vor der Küste liegender Zone der Wellelnenergie-Vernichtung,

Fig. 4 in einer Ansicht von oben einen Abschnitt des Schwimmteppichs aus Kraftfahrzeugreifen,

Fig. 5 in einem senkrkechten Schnitt einen Kraftfahrzeug- reifen des Schwimmteppichs,

Fig. 6 in einem senkrechten Schnitt einen Abschnitt des Schwimmteppichs,

Fig. 7 und 8 in Ansichten von oben verschiedene Anordnungen von Kraftfahrzeugreifen zu einem Schwimmteppich,

Fig. 9 die Wellendämpfung unter Anwendung eines Schwimm- teppichs, und

Fig. 10 in einem senkrechten Schnitt einen auf den Meeresboden abgesenkten Schwimmteppich.

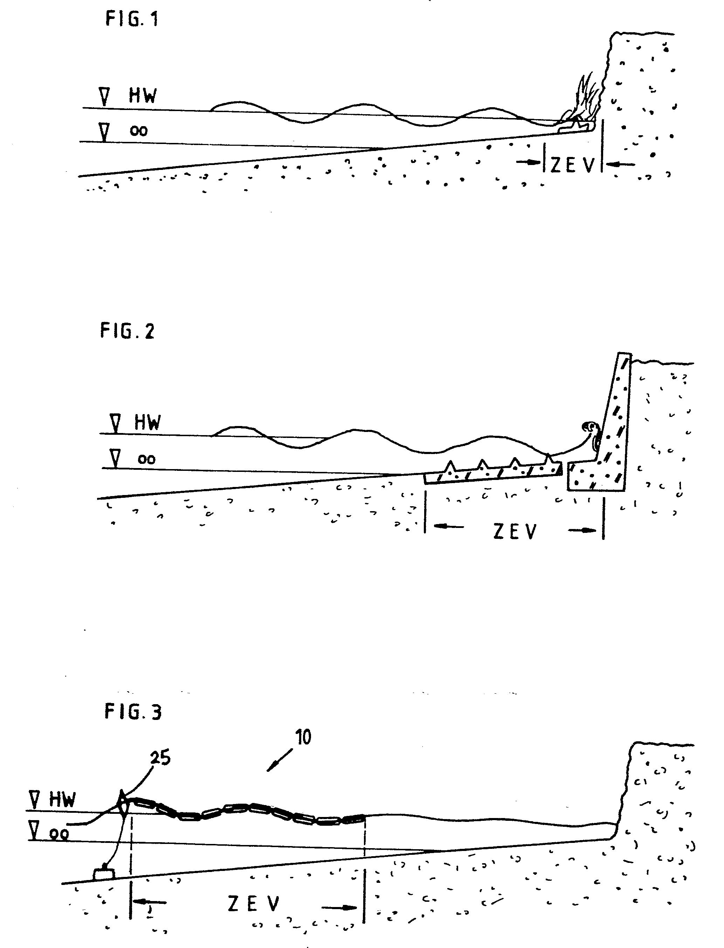

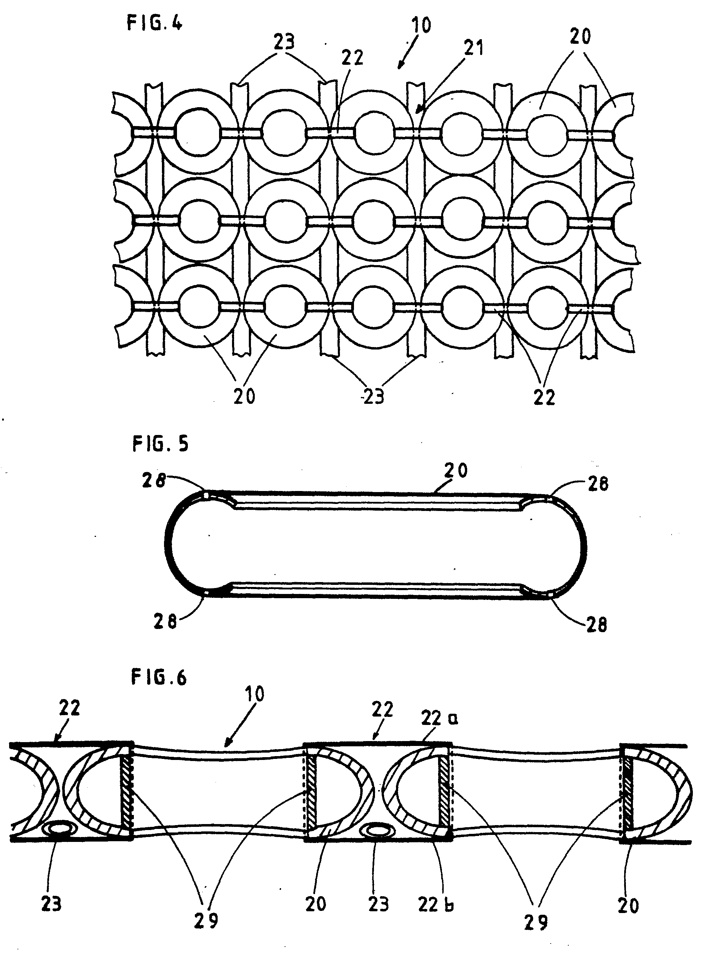

Die Vorrichtung zum Schutz von Küsten und von wellenbeaufschlagten Bauwerken bzw. von in Ufernähe angeordneten Bauwerken besteht aus einem Schwimmteppich 10, der aus einer Anzahl von reihenweise neben- und hintereinander oder zueinander versetzt angeordneten Kraftfahrzeugreifen 20 besteht, die über Flechtwerke 21 miteinander verbunden sind (Fig. 4,7 und 8).

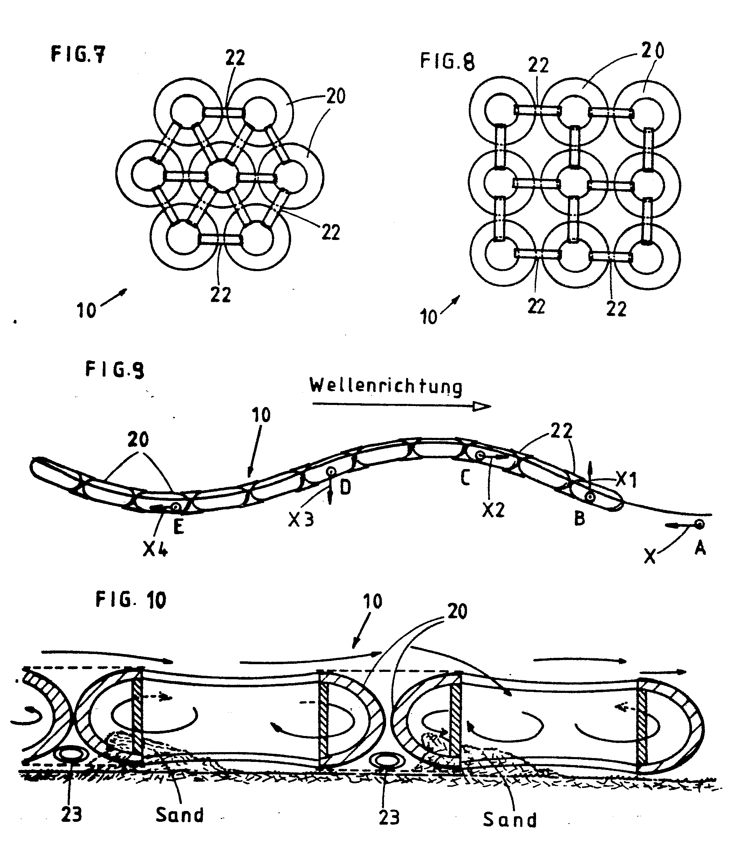

Der in Fig. 4 dargestellte Schwimmteppich 10 besteht aus handelsüblichen, vorwiegend gebrauchten, Kraftfahrzeugreifen 20, die über ein Flechtwerk 21 teppichartig miteinander verbunden sind. Das Flechtwerk 21 besteht aus Bändern, Seilen, Abstandshaltern oder anderen geeigneten Verbindungseinrichtungen. Bei dem in Fig. 4 und 6 gezeigten Ausführungsbeispiel sind die Kraftfahrzeugreifen 20 über Abstandshalter 22, die gleichzeitig die Verbindungselemente zwischen den Kraftfahrzeugreifen bilden, miteinander verbunden, wobei die Abstandshalter die einzelnen Kraftfahrzeugreifen 20 in ihrem oberen Bereich und in ihrem unteren Bereich zusammenhalten und miteinander verbinden. Hier besteht die Verbindungseinrichtung aus oberen Abstandshaltern 22a und unteren Abstandshaltern 22b. Wie Fig. 6 erkennen läßt, ist der Abstandshalter 22 klammerartig bzw. ringartig ausgebildet und umgreift zwei Kraftfahrzeugreifen 20 unter Ausbildung eines obenseitigen Abstandshalterabschnittes 22a und eines bodenseitigen Abstandshalterabschnittes 22b. Wenn mit sehr hohen Wellen zu rechnen ist, werden zweckmäßigerweise die Kraftfahrzeugreifen so angeordnet, daß jeder von ihnen mit vier oder sechs Nachbarreifen verbunden ist (Fig.7 und 8). Die Zahl der Abstandshalter bzw. Verbindungselemente wird zwar dadurch größer, aber auch die Festigkeit des Schwimmteppichs.

Das Flechtwerk 21 für den Schwimmteppich 10 aus Kraftfahrzeugreifen 20 besteht aus Tragschläuchen 23, die aufblasbar, d.h. mit Luft befüllbar, und die als Gitterwerk ausgebildet sind und die die miteinander verbundenen Kraftfahrzeugreifen tragen oder die parallel zueinander in einem Abstand verlaufend angeordnet sind, wobei der Abstand je zweier Tragschläuche 23 voneinander etwa dem Außendurchmesser eines Kraftfahrzeugreifens entspricht, so daß je zwei Kraftfahrzeugreifen mit ihren Abschnitten auf einem der Tragschläuche 23 zu liegen kommen (Fig.4). Vorteilhafterweise sind die Tragschläuche 23 an den bodenseitigen Abstandshalterabschnitten 22b bzw. auf den unteren Abstandshaltern liegend angeordnet (Fig.6). Alle Tragschläuche 23 sind an einen in der Zeichnung nicht dargestellten Luftzuführungsstutzen angeschlossen, über den alle Tragschläuche 23 aufblasbar sind. Um bei Verletzung eines Tragschlauches 23 das Absinken des Schwimmteppichs zu vermeiden, können einige Tragschläuche zu je einem Luftzuführungsstutzen zusammengefaßt werden. Diese Luftzuführungsstutzen stehen mit einem in der Zeichnung nicht dargestellten Kompressor oder andersartig ausgebildeten

Drucklufterzeugungseinrichtungen in Verbindung. Sind die Tragschläuche 23 mit Luft gefüllt, dann bilden sie das schwimmende Element für den Schwimmteppich 10. Sind die Tragschläuche 23 entleert, dann senkt sich der Schwimmteppich 10 aufgrund des Eigengewichtes der Kraftfahrzeugreifen 20 auf den Meeresboden ab.

Die für die Herstellung des Schwimmteppichs 10 verwendeten Kraftfahrzeugreifen können in der handelsüblichen Form Verwendung finden (Fig.5). Vorteilhaft ist es jedoch, die Kraftfahrzeugreifen 20 vor der Befestigung miteinander so zu verformen, daß sie laufflächenseitig eine etwa keilförmige Formgebung aufweisen, die dies in Fig. 6 dargestellt ist. Jeder Kraftfahrzeugreifen 20 ist laufflächenseitig an zwei Stellen durch Füllstücke 20 aufgespreizt oder erweitert.

Wesentlich ist jedoch, daß das die Kraftfahrzeugreifen 20 zusammenhaltende Flechtwerk 21 eine gewisse Elastizität aufweist, damit sich die Kraftfahrzeugreifen 20 den Wellenbewegungen anpassen können. Die Abstandshalter 22 sind elastisch und aus entsprechend geeigneten Werkstoffen gefertigt. Die Kraftfahrzeugreifen 20 sind derart geneigt zueinander angeordnet, daß die Ebenen der Kraftfahrzeugreifen zu der Hauptwellenrichtung eine Zick-Zackfläche mit Neigungswinkeln von etwa 10° bis 25° zur Horizontalebene bilden.

Die als Schwimmteppich 10 ausgebildete Küstenschutzvorrichtung dient einerseits zur Dämpfung der Meereswellen und kann andererseits auch zur Verhinderung von Sandwanderungen eingesetzt werden (Fig.10).

Zur Vernichtung der Energie von Meereswellen im Bereich einer Küste ist die Verwendung eines Schwimmteppichs 10 besonders vorteilhaft, da für die Herstellung des Schwimmteppichs alte, nicht mehr brauchbare Kraftfahrzeugreifen Verwendung finden können, so daß die Möglichkeit gegeben ist, die Meereswellenenergie mit möglichst großer Kosteneffektivität zu vernichten. Aus den Kraftfahrzeugreifen 20 wird ein Schwimmteppich 10 gebildet, der vor der zu schützenden Küste oder einem Bauwerk auf der Wasseroberfläche angeordnet und am Meeresboden mittels geeigneter Einrichtungen, wie Bojenstein, Grundanker od.dgl. 25 verankert wird. Wie Fig. 3 zeigt, wird durch die Anordnung des Schwimmteppichs 10 in einem Abstand von der Küste die Zone der Meereswellenenergie-Vernichtung weit vor die Küste auf eine große Fläche verlegt, die durch die Abmessungen des Schwimmteppichs 10 festgelegt ist. Sind die Tragschläuche 23 des Flechtwerkes 21 mit Luft gefüllt, schwimmt der Teppich 10 auf der Meeresoberfläche. Werden dagegen die Tragschläuche 23 entleert, und zwar durch Entweichen der Luft, dann legt sich der Schwimmteppich 10 auf den Meeresgrund. Durch Verankerung, ähnlich wie bei Seezeichen, ist der Schwimmteppich 10 in Position haltbar. Die Breite des Teppichs 10 muß etwas größer sein als die Länge des Ufers, das vor dem Wellenschlag geschützt werden soll. Die Ausdehnung des Schwimmteppichs 10 nach See sollte mindestens die Wellenlänge der wichtigsten, zu dämpfenden Wellen betragen. Grundsätzlich können die Kraftfahrzeugreifen 20 zur Herstellung des Schwimmteppichs 10 unverändert verwendet werden. Es ist jedoch vorteilhaft, wenn die Kraftfahrzeugreifen durch einfache und billige Spannstücke verformt sind, wie dies in Fig. 6 dargestellt ist, um ihren Widerstand gegen horizontale Strömung zu vergrößern. Es ist ferner vorteilhaft, in den Seitenwaänden der Kraftfahrzeugreifen 20 lochartige Durchbrechungen 28 vorzusehen, um Luft oder Sandkörner, die im Betrieb des Schwimmteppichs in die Kraftfahrzeugreifen-Innenräume eindringen, entweichen zu lassen (Fig.5).

Die Küstenschutzvorrichtung kann so angewandt werden, daß nur bei besonderer Gefahr, etwa für die Steilküste oder ein Bauwerk, der auf dem Meeresgrund liegende Schwimmteppich 10 durch Einblasen von Luft in das Schlauchsystem oder in die Schwimmkörper zur Oberfläche gehoben wird. Die übrige Zeit verbleibt der Schwimmteppich 10 auf dem Meeresgrund.

Der tauchfähige Schwimmteppich ist jedoch auch noch für eine weitere Aufgabe einsetzbar, die beim Küstenschutz ebenfalls von besonderer Bedeutung ist:

Der Schwimmteppich kann, wenn er auf sandigem Meeresboden liegt, verhindern, daß Sand durch die Strömung abgetragen wird oder er kann zur Ablagerung von Sand beitragen, der von der Strömung mitgeführt wird. Um zu vermeiden, daß der Schwimmteppich im Sand eingespült wird, ist es nötig, den Schwimmteppich - etwa beim Kentern der Strömung - durch Lufteinblasen in die Tragschläuche 23 kurzzeitig anzuheben. Bei einer solchen Verwendung könnte sich ein wesentlich geringerer Energieverbrauch ergeben als bei den bekannten,teuren Verfahren zum Aufspülen von Sand.

Es ist bekannt, daß schon ein Ölfilm die Wellen auf dem Wasser beruhigt.

Wesentlich wirkungsvoller ist dagegen die Dämpfung mit einem auf der Welle schwimmenden Teppich 10 aus Kraftfahrzeugreifen 20. Fig. 9 zeigt eine Welle mit einem Schwimmteppich 10, bei dem die Kraftfahrzeugreifen so verbunden sind, daß der Schwimmteppich horizontal steif, vertikal aber so biegsam ist, daß er der Wellenoberfläche genau folgt. An dem Punkt E wird die dort vorhandene, nach links gerichtete Strömung einen Kraftfahrzeugreifen horizontal anströmen, an dem Punkt C wird jedoch ein Kraftfahrzeugreifen entsprechend horizontal nach rechts angeströmt. Zwischen diesen Punkten ändert sich die Richtung der Anströmung entgegen dem Uhrzeiger-Sinn zunächst nach unten und dann nach rechts. Der Energieverbrauch ist somit in den Bereichen bei E und C ein Maximum, bei D ein Minimum. Während der Ölfilm dem Wasser nur an der Wellenoberfläche Energie entziehen kann, können die Kraftfahrzeugreifen entsprechend ihrer Dicke und Form dem Wasser auch noch im Abstand von 0 cm bis 20 cm von der Oberfläche Energie entziehen.

Mit den Kraftfahrzeugreifen kann zusätzlich Wellenenergie vernichtet werden, und zwar insofern, als die Kraftfahrzeugreifen durch die Art ihrer Verbindung (Fig.4) zu einem Schwimmteppich 10, der als biegeelastische Platte Eigenschwingungsformen bilden kann, die mit den wichtigsten Wellen etwa
in Resonanz kommen,miteinander verbunden werden. Dann wird
an dem Punkt D (Fig.9) eine vertikale Amplitude des Kraftfahrzeugreifens relativ zur Wasseroberfläche entstehen.
Wesentlich ist hier neben der Biegeelastizität des Teppichs
auch eine hinreichend große Masse, zu der neben den Kraftfahrzeugreifen selbst ihre mitschwingende Wassermasse zuzurechnen ist. Diese ist aufgrund der ringförmigen, nach der
Mitte offenen Form der Kraftfahrzeugreifen recht groß.

Der Schwimmteppich 10 besteht aus einem Flechtwerk
21 aus Kraftfahrzeugreifen 20, Tragschläuchen 23 und Verbindungseinrichtungen bzw. Verbindungsstücken in Form von
Bändern, Seilen, Abstandshaltern od.dgl. 22. Alle diese
Teile sind elastisch. Da der Schwimmteppich nur selten aufschwimmen muß - bei Sturmfluten - wird er sich nur wenig
abnutzen. Ist der Schwimmteppich 10 auf dem Meeresboden
liegend angeordnet, nutzt er sich nicht ab. Alte Kraftfahrzeugreifen sind für die Herstellung des Schwimmteppichs
10 das denkbar billigste elastische Material, das im Wasser
nicht altert. Darüber hinaus ist ein geeignetes spezifisches
Gewicht mit knapp über 1 gegeben. Es ist vorteilhaft, an
dem zu schützenden Küstenstreifen Schwimmteppiche von etwa
40m x 40m auszulegen und jeden Schwimmteppich an einer oder
zwei verankerten Bojen festzumachen. Eine der Bojen könnte
mit einam am Ankerstein angebrachten Druckmeßgerät versehen
werden. Wenn der mittlere und der pulsierende Wasserdruck
eine bestimmte Größe erreicht, setzt sich die in der Boje
eingebaute, motorisch angetriebene Luftpumpe automatisch
in Gang, so daß der auf dem Meeresboden liegende Teppich
aufschwimmt.

Patentansprüche

1. Vorrichtung zur Dämpfung von Oberflächenwellen, insbesondere zum Schutz von schwimmenden oder festen Bauwerken oder von Küsten, bestehend aus einem schwimmfähigen Teppich aus einer Anzahl von reihenweise neben- und hintereinander oder versetzt zueinander angeordneten, mittels Seilen oder Ketten miteinander verbundenen Schwimmkörpern aus Kraftfahrzeugreifen, dadurch gekennzeichnet, daß der Schwimmteppich (10) als biegeelastische Platte aus waagerecht liegend angeordneten Kraftfahrzeugreifen (20) besteht, die über obere und/oder untere Abstandshalter (22a,22b) miteinander verbunden und auf in einem Abstand voneinander angeordneten Auftriebskörpern, wie z.B. aufblasbaren Tragschläuchen (23), angeordnet sind.

2. Vorrichtung nach Anspruch 1, dadurch gekennzeichnet, daß die Ebenen der Kraftfahrzeugreifen zu der Hauptwellenlängsrichtung eine Zick-Zack-Fläche mit Neigungswinkeln von etwa 10° bis 25° zur Horizontalebene bilden.

3. Vorrichtung nach Anspruch 1 und 2, dadurch gekennzeichnet, daß jeder Kraftfahrzeugreifen (20) innen an zwei Stellen durch Füllstücke (29) aufgespreizt oder erweitert ist.

4. Vorrichtung nach einem der Ansprüche 1 bis 3, dadurch gekennzeichnet, daß die Kraftfahrzeugreifen (20) an ihren Seitenwänden mit lochartigen Durchbrechungen (28) versehen sind.

5. Vorrichtung nach einem der Ansprüche 1 bis 4, dadurch gekennzeichnet, daß bei Verankerung des Schwimmteppichs mittels Bojen und Bojensteinen oder Grundankern der Bojenstein einer der mit dem Schwimmteppich (10) verbundenen Bojen (25) mit einem Wasserdruckmeßgerät und die Bojen mit einer motorisch antreibbaren Luftpumpe mit Schlauch-

0165541

einrichtung zum Füllen der mit einem Luftzuführungsstutzen
versehenen Tragschläuche (23) versehen sind, die über
das Wasserdruckmeßgerät einschaltbar ist.

FIG.1

FIG.2

FIG.3

ZEV = Energievernichtende Zone

0165541

1/3

FIG. 4

FIG. 5

FIG. 6

FIG.7

20

22

22

22

10

FIG.8

22  20  20

22  22

10

FIG.9

Wellenrichtung →

20      10      22

E       D       C       X1
X4      X3      X2      B      X  A

FIG.10

10      20

23  Sand      23  Sand